# EUROPEAN PATENT APPLICATION

(11) **EP 4 329 159 A1**
(43) Date of publication of application: **28.02.2024**
(21) Application number: 23161421.5
(22) Date of filing: 13.03.2023
(51) Int. Cl.: H02K 7/02, B62M 7/02

(54) **ELECTRIC POWER UNIT AND STRADDLED VEHICLE HAVING THE SAME**

(30) Priority: 23.08.2022 JP 2022132180
(71) Applicant: Yamaha Hatsudoki Kabushiki Kaisha, Iwata-shi, Shizuoka 438-8501 (JP)
(72) Inventor: MATSUOKA, Yoshinori, Iwata-shi, 438-8501 (JP)
(74) Representative: Studio Torta S.p.A.

(57) **Abstract**

There is disclosedan electric power unit (5) including: an electric motor (12) having a motor shaft (11); an output shaft (13) that outputs power; a power transmission mechanism (15) that is connected to the motor shaft (11) and the output shaft (13) and transmits power of the motor shaft (11) to the output shaft (13); and a torsion damper (20) provided in the power transmission mechanism (15).

## Description

### Technical field

The present invention relates to an electric power unit and a straddled vehicle having the same.

### Prior Art

Straddled vehicles have been known in the art that have an electric motor as a driving source for driving. Electric motors are easier to control than internal combustion engines. A clutch and a transmission are necessary for a straddled vehicle having an internal combustion engine, whereas a clutch and a transmission can be omitted for a straddled vehicle having an electric motor (hereinafter referred to as an electric vehicle).

However, with an electric vehicle without a clutch and a transmission, there is less of so-called play in the power transmission mechanism from the electric motor to the drive wheel. The driving force of the electric motor is transmitted instantaneously to the drive wheel. Therefore, the rider tends to feel a rigid operating feel. Since it is difficult to apply a large instantaneous force to the drive wheel when starting or accelerating, the rider is less likely to feel the power and the tenacity of driving.

JP 2019-155986A proposes to provide a clutch and an energy-storing rotor in an electric vehicle for the purpose of improving the controllability of the electric vehicle. With this electric vehicle, the provision of the clutch improves the operating feel for the rider. The electric vehicle can store energy by disengaging the clutch and rotating the energy-storing rotor. For example, by engaging the clutch when starting, the energy stored in the energy-storing rotor can be transmitted to the drive wheel in addition to the driving force of the electric motor. Therefore, a large force can be applied to the drive wheel instantaneously.

With the electric vehicle disclosed in JP 2019-155986A, however, there is a need for a clutch and an energy-storing rotor. This leads to a problem that the electric power unit becomes larger in size.

### Description of the invention

The present invention has been made in view of the above, and an object thereof is to provide a relatively small electric power unit and a straddled vehicle having the same, with which it is possible to improve the operating feel for the rider.

An electric power unit disclosed herein includes an electric motor having a motor shaft, an output shaft for outputting power, a first power transmission mechanism connected to the motor shaft and the output shaft for transmitting power of the motor shaft to the output shaft, and a damper provided in the first power transmission mechanism.

With the electric power unit described above, since the damper produces play in the first power transmission mechanism, the rider is less likely to feel rigid operating feel. Thus, it is possible to improve the operating feel for the rider. When the rider performs an operation so that the torque of the electric motor increases rapidly when starting or accelerating, part of the energy output by the electric motor is temporarily stored in the damper and then released toward the output shaft. Therefore, even without the energy-storing rotor, it is possible to output a large driving force instantaneously from the output shaft. With the electric power unit described above, there is no need for an energy-storing rotor and a clutch, and it is possible to reduce the size of the electric power unit.

The damper may be a torsion damper including: a first rotor; a second rotor arranged coaxial with the first rotor; and a spring that is interposed between the first rotor and the second rotor and transmits a torque of the first rotor to the second rotor.

Thus, since it is possible to relatively reduce the size of the damper, it is possible to reduce the size of the electric power unit.

The electric power unit may include an idle shaft that is parallel to the motor shaft and/or the output shaft. The first rotor and the second rotor may be supported on the idle shaft.

Thus, as the torsion damper is supported on the idle shaft, which is separate from the motor shaft and the output shaft, the installation of the torsion damper is unlikely to be constrained by the position of the motor shaft and the output shaft. It is possible to increase the degree of freedom in installation of the torsion damper.

The first rotor and the second rotor may be supported on the motor shaft. The first rotor and the second rotor may be supported on the output shaft.

The electric power unit may include a control unit that controls the electric motor so that a torque of the electric motor changes periodically while a steady drive signal is received.

With the electric power unit described above, a damper is provided in the first power transmission mechanism, and the damper has a natural period. If the control unit performs a control so that the fluctuation period of the torque of the electric motor is made to be equal to or closer to the natural period, it is possible to produce resonance. By using the resonance, it is possible to output a large driving force.

The control unit may be configured to control the electric motor so that the fluctuation period of the torque of the electric motor is a predetermined set period based on the natural period of the damper.

Thus, it is possible to make use of resonance, and output a larger driving force from the output shaft.

The electric power unit may include a control unit that, when starting to drive the electric motor, controls the electric motor so as to temporarily generate a torque in a reverse direction and then generate a torque in a forward direction on the electric motor.

Then, as the torque in the reverse direction is temporarily generated on the electric motor, energy is stored in the damper. Then, as the torque in the forward direction is generated on the electric motor, the energy stored in the damper is released in addition to the energy output from the electric motor. Thus, it is possible to instantaneously output a large driving force when starting.

The electric power unit may include a control unit that, when a command to increase a torque of the electric motor is received while the electric motor is running, controls the electric motor so as to temporarily decrease and then increase the torque of the electric motor.

Then, when the torque of the electric motor is temporarily decreased, energy is stored in the damper. Then, as the torque of the electric motor is increased, the energy stored in the damper is released in addition to the energy output from the electric motor. Therefore, it is possible to instantaneously output a large driving force while running.

The electric power unit may include another damper provided in the first power transmission mechanism.

Then, since a plurality of dampers are provided in the first power transmission mechanism, it is possible to further enhance the effects described above.

A straddled vehicle disclosed herein includes: an electric power unit described above; a drive wheel that is driven by power of the electric motor; and a second power transmission mechanism that connects together the output shaft and the drive wheel.

The output shaft may include a connecting portion connected to the second power transmission mechanism. The connecting portion may be arranged on one side in an axial direction of the motor shaft relative to a middle position of the motor shaft in the axial direction; and the damper may be arranged on the other side in the axial direction relative to the middle position of the motor shaft in the axial direction.

The output shaft may include a connecting portion connected to the second power transmission mechanism. The connecting portion and the damper may be arranged on one side in an axial direction of the motor shaft relative to a middle position of the motor shaft in the axial direction.

The straddled vehicle may be an off-road motorcycle.

Off-road motorcycles, as compared to on-road motorcycles, tend to be required to instantaneously output a larger driving force from the electric power unit to the drive wheel when starting or accelerating. Therefore, the effects described above are particularly useful.

According to the present invention, it is possible to provide a relatively small electric power unit and a straddled vehicle having the same, with which it is possible to improve the operating feel for the rider.

### Brief descrption of the drawings

FIG. **1** is a side view of a motorcycle.
FIG. **2** is a cross-sectional view of an electric power unit according to one embodiment.
FIG. **3** is a front view of a torsion damper.
FIG. **4** is a cross-sectional view of an electric power unit according to another embodiment.
FIG. **5** is a cross-sectional view of an electric power unit according to another embodiment.
FIG. **6** is a cross-sectional view of an electric power unit according to another embodiment.
FIG. **7** is a block diagram of a control system for controlling an electric motor.

### Embodiments of the invention

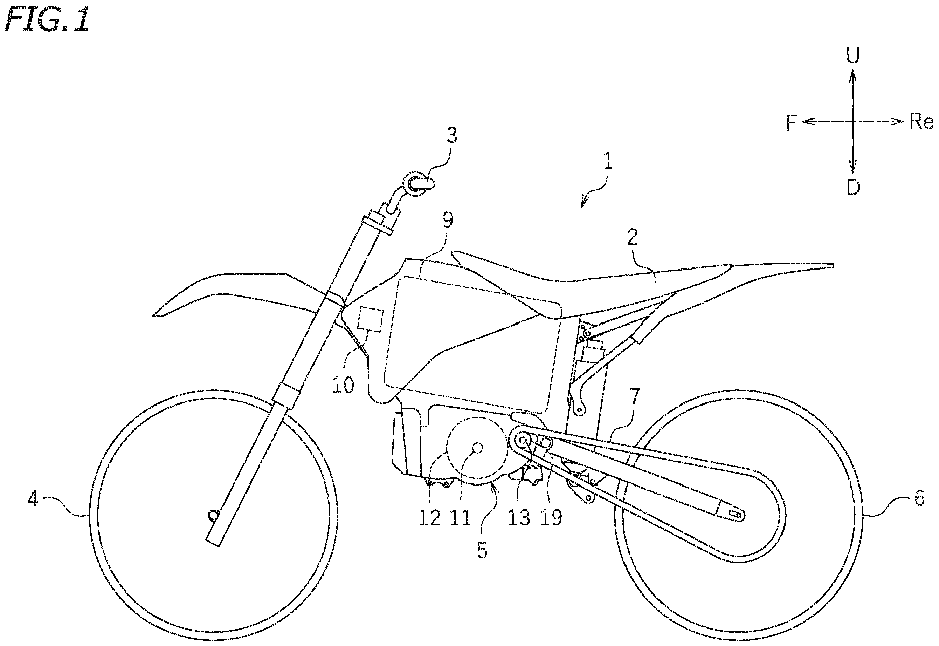

An embodiment will now be described. As shown in FIG. **1****,** one embodiment of a straddled vehicle to be described below is an off-road motorcycle **1.** Herein, the motorcycle **1** is a motocrosser.

The terms front, rear, left, right, up and down, as used in the description below, refer to these directions as viewed from a virtual rider seated on a seat **2** while the motorcycle **1** is standing upright on a horizontal surface with no rider and no load thereon, unless specified otherwise. The designations F, Re, L, R, U and D, as used in the figures, refer to front, rear, left, right, up and down, respectively.

The motorcycle **1** includes a seat **2,** a handle **3,** an electric power unit **5,** a front wheel **4,** a rear wheel **6,** and a chain **7** linking the electric power unit **5** and the rear wheel **6.** The rear wheel **6** is a drive wheel driven by the power of the electric power unit **5.** The motorcycle **1** includes a control unit **10** that controls the electric power unit **5.**

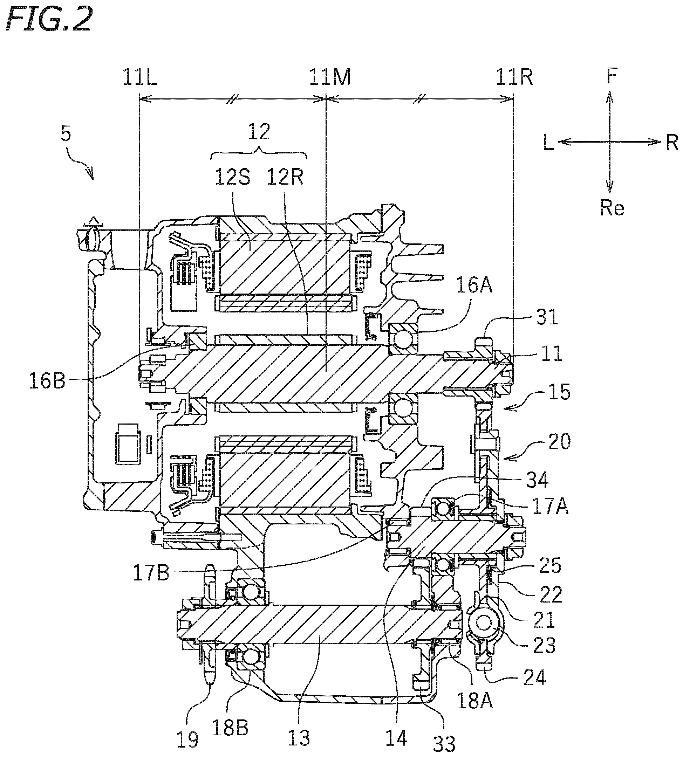

The electric power unit **5** includes an electric motor (hereinafter referred to simply as motor) **12** having a motor shaft **11,** and a battery **9.** FIG. **2** is a cross-sectional view of the electric power unit **5.** The electric power unit **5** includes an output shaft **13** that outputs power, a power transmission mechanism **15** that transmits the power of the motor shaft **11** to the output shaft **13,** and a torsion damper **20** provided in the power transmission mechanism **15.**

The motor **12** includes a rotor **12R** fixed to the motor shaft **11** and a stator **12S** arranged around the rotor **12R.** In the present embodiment, the motor shaft **11** extends in the left-right direction of the vehicle. The motor shaft **11** is rotatably supported on a bearing **16A** and a bearing **16B.**

The power transmission mechanism **15** is an example of the "first power transmission mechanism". In the present embodiment, the power transmission mechanism **15** is a mechanism that transmits power by a plurality of gears. Note however that the power transmission mechanism **15** only needs to be a mechanism that transmits the power of the motor shaft **11** to the output shaft **13,** and there is no particular limitation on its specific configuration. The power transmission mechanism **15** is connected to the motor shaft **11** and the output shaft **13.** The power transmission mechanism **15** includes a gear **31** fixed to the motor shaft **11,** a gear **24** meshing with the gear **31,** a torsion damper **20** provided with the gear **24,** an idle shaft **14** supporting the torsion damper **20,** a gear **34** formed on the idle shaft **14,** and a gear **33** meshing with the gear **34.** The gear **33** is fixed to the output shaft **13.** The idle shaft **14** is rotatably supported on a bearing **17A** and a bearing **17B.** The idle shaft **14** is arranged parallel to the motor shaft **11.** The idle shaft **14** extends in the left-right direction of the vehicle.

The output shaft **13** is rotatably supported on a bearing **18A** and a bearing **18B.** The output shaft **13** is arranged parallel to the motor shaft **11.** The output shaft **13** extends in the left-right direction of the vehicle. The gear **33** is fixed to the right end of the output shaft **13.** A sprocket **19** is fixed to the left end of the output shaft **13.** A chain **7** (see FIG. **1**) is wound around the sprocket **19.**

The chain **7** is an example of the "second power transmission mechanism" connecting together the output shaft **13** and the rear wheel **6,** which is the drive wheel. Note that the sprocket **19** is an example of the "connecting portion" connected to the second power transmission mechanism of the output shaft **13.** The chain **7** transmits the power of the output shaft **13** to the rear wheel **6.** Note however that the second power transmission mechanism is not limited to the chain **7.** The second power transmission mechanism may include, for example, a transmission belt or a drive shaft.

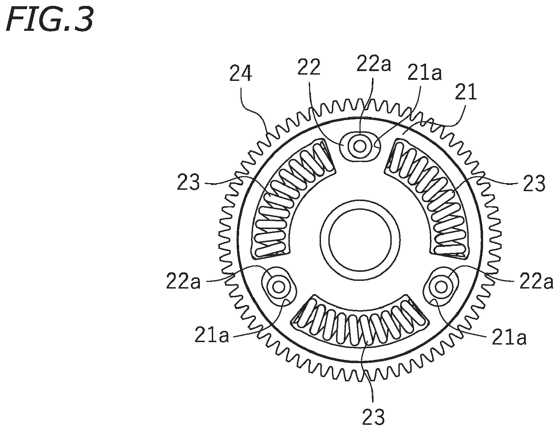

Next, the torsion damper **20** will be described. FIG. **3** is a front view of the torsion damper **20,** as viewed from the left side of the motorcycle **1.** The torsion damper **20** includes a first rotor **21,** a second rotor **22** and a spring **23.**

The first rotor **21** and the second rotor **22** are supported on the idle shaft **14.** The second rotor **22** is arranged coaxial with the first rotor **21.** The idle shaft **14** is provided with a bearing **25,** and the first rotor **21** is rotatably supported on the bearing **25.** The first rotor **21** is rotatable about the idle shaft **14.** The second rotor **22** is not rotatable about the idle shaft **14.** The second rotor **22** is configured to rotate together with the idle shaft **14.**

The first rotor **21** has a long hole **21a** formed therein. The second rotor **22** has a pin **22a** inserted into the long hole **21a.** The second rotor **22** is rotatable relative to the first rotor **21.** As the pin **22a** contacts the edge of the long hole **21a,** the rotation of the second rotor **22** relative to the first rotor **21** is regulated. The second rotor **22** is rotatable relative to the first rotor **21** until the pin **22a** contacts the edge of the long hole **21a.** The second rotor **22** is configured to be rotatable relative to the first rotor **21** by a predetermined angle. Note that the number of long holes **21a** and pins **22a** is 3 in the present embodiment, but there is no particular limitation thereto.

The spring **23** is interposed between the first rotor **21** and the second rotor **22.** In other words, the spring **23** is arranged between the first rotor **21** and the second rotor **22** on the path of power transmission. The spring **23** transmits the torque of the first rotor **21** to the second rotor **22.** Here, the spring **23** is a coil spring, and the number of springs **23** is 3, but there is no particular limitation on the form and the number of springs **23.**

The gear **24** is formed on the first rotor **21.** Here, the gear **24** and the first rotor **21** are an integral piece. However, the gear **24** may be formed separately from the first rotor **21.**

In FIG. **2****,** reference sign **11L** denotes a straight line that indicates the left end position of the motor shaft **11,** and reference sign **11R** denotes a straight line that indicates the right end position of the motor shaft **11.** Reference sign **11M** denotes a straight line that indicates the middle position between the left end and the right end of the motor shaft **11.** In other words, reference sign **11M** denotes the middle position of the motor shaft **11** in the axial direction. In the present embodiment, the sprocket **19** is arranged on one side in the axial direction relative to the middle position **11M** of the motor shaft **11** in the axial direction, and the torsion damper **20** is arranged on the other side in the axial direction relative to the middle position **11M** of the motor shaft **11** in the axial direction. Here, the sprocket **19** is arranged leftward relative to the middle position **11M** of the motor shaft **11,** and the torsion damper **20** is arranged rightward relative to the middle position **11M** of the motor shaft **11.** Note however that the sprocket **19** may be arranged rightward relative to the middle position **11M** of the motor shaft **11,** and the torsion damper **20** may be arranged leftward relative to the middle position **11M** of the motor shaft **11.**

The electric power unit **5** and the motorcycle **1** are configured as described above. Next, the various effects brought about by the electric power unit **5** and the motorcycle **1** will be described.

With the electric power unit **5,** the torsion damper **20** is provided in the power transmission mechanism **15** that transmits the power of the motor shaft **11** to the output shaft **13.** Since the torsion damper **20** produces play in the power transmission mechanism **15,** the rider is less likely to feel a rigid operating feel. Thus, it is possible to improve the operating feel for the rider.

When the rider performs an operation so that the torque of the motor **12** increases rapidly when starting or accelerating, part of the energy output by the motor **12** is temporarily stored in the spring **23** of the torsion damper **20** and then released toward the output shaft **13.** With the electric power unit **5,** it is possible to output a large driving force instantaneously from the output shaft **13** without separately providing an energy-storing rotor. When the rider performs an operation for rapid start or rapid acceleration, it is possible to make the motorcycle **1** start or accelerate rapidly following the operation. The rider can feel the power and the tenacity of driving of the motorcycle **1** when starting or accelerating. Thus, it is possible to improve the operating feel for the rider.

For example, when the motorcycle **1** runs over a step, the impact generated on the rear wheel **6** may be transmitted to the electric power unit **5.** According to the present embodiment, the impact transmitted to the output shaft **13** is absorbed by the torsion damper **20.** Therefore, it is possible to mitigate the impact applied on the motor **12.** It is possible to desirably protect the motor **12** from the impact from the road surface.

With the electric power unit **5,** there is no need for an energy-storing rotor and a clutch. Thus, it is possible to reduce the size of the electric power unit **5.**

Note that the damper provided in the power transmission mechanism **15** is not limited to the torsion damper **20.** Note however that if the torsion damper **20** is used as the damper of the power transmission mechanism **15,** it is possible to relatively reduce the size of the damper. Thus, it is possible to reduce the size of the electric power unit **5.**

According to the present embodiment, the torsion damper **20** is supported on the idle shaft **14,** which is separate from the motor shaft **11** and the output shaft **13.** The installation of the torsion damper **20** is unlikely to be constrained by the position of the motor shaft **11** and the output shaft **13.** Thus, it is possible to increase the degree of freedom of installation of the torsion damper **20.**

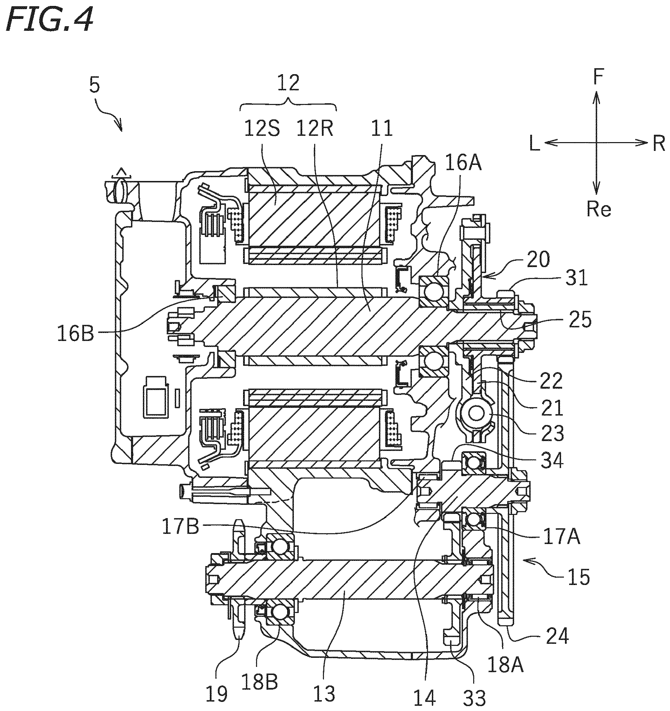

Note however that the torsion damper **20** may be supported on a shaft other than the idle shaft **14.** For example, as shown in FIG. **4****,** the torsion damper **20** may be supported on the motor shaft **11.** The first rotor **21** and the second rotor **22** may be supported on the motor shaft **11.** In the following description, like elements to those of the embodiment described above will be denoted by like reference signs, and the description thereof will be omitted.

In the embodiment shown in FIG. **4****,** the bearing **25** is provided on the motor shaft **11** and the first rotor **21** is rotatably supported on the bearing **25.** The first rotor **21** is rotatable about the motor shaft **11.** The second rotor **22** is configured to be not rotatable about the motor shaft **11** but to rotate together with the motor shaft **11.** The gear **31** is provided on first rotor **21.** The gear **24** meshing with the gear **31** is supported on the idle shaft **14.** The idle shaft **14** rotates together with the gear **24.** Otherwise, the configuration is similar to that of the embodiment described above (see FIG. **2**).

Also in the embodiment shown in FIG. **4****,** the torsion damper **20** is provided in the power transmission mechanism **15** that transmits the power of the motor shaft **11** to the output shaft **13.** As in the embodiment described above, it is possible to improve the operating feel for the rider, and it is possible to reduce the size of the electric power unit **5.**

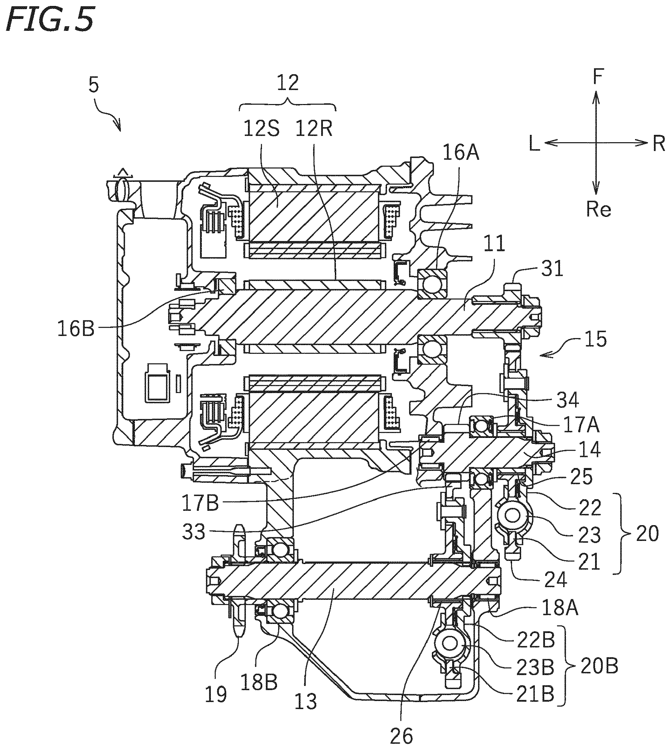

The torsion damper **20** may be supported on the output shaft **13.** The number of dampers provided in the power transmission mechanism **15** is not limited to 1. A plurality of dampers may be provided in the power transmission mechanism **15.** The embodiment shown in FIG. **5** is an embodiment in which the electric power unit **5** includes the torsion damper **20** supported on the idle shaft **14** and a torsion damper **20B** supported on the output shaft **13.** In the following description, like elements to those of the embodiment described above will be denoted by like reference signs, and the description thereof will be omitted.

In the embodiment shown in FIG. **5****,** the torsion damper **20B** includes a first rotor **21B** and a second rotor **22B** supported on the output shaft **13,** and a spring **23B** interposed between the first rotor **21B** and the second rotor **22B.** The gear **33** meshing with the gear **34** of the idle shaft **14** is provided on the first rotor **21B.** The first rotor **21B** rotates together with the idle shaft **14.** The first rotor **21B** is rotatably supported on a bearing **26** provided on the output shaft **13.** The first rotor **21B** is rotatable about the output shaft **13.** The second rotor **21B** is un-rotatably fixed to the output shaft **13.** The output shaft **13** rotates together with the second rotor **21B.** Otherwise, the configuration is similar to that of the embodiment described above (see FIG. **2**).

Also in the embodiment shown in FIG. **5****,** the torsion damper **20** is provided in the power transmission mechanism **15** that transmits the power of the motor shaft **11** to the output shaft **13.** Similar effects to those of the embodiment described above can be obtained. In addition, according to the embodiment shown in FIG. **5****,** another torsion damper **20B** is provided in the power transmission mechanism **15.** Therefore, it is possible to further enhance the effects described above.

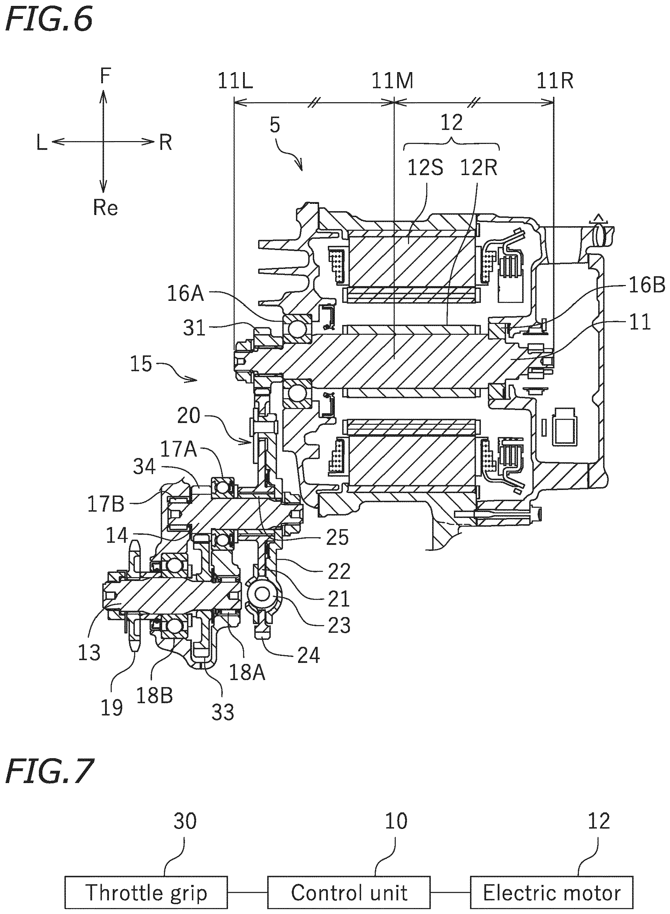

In the embodiment shown in FIG. **2****,** the sprocket **19** is arranged on one side in the axial direction relative to the middle position **11M** of the motor shaft **11** in the axial direction, and the torsion damper **20** is arranged on the other side in the axial direction relative to the middle position **11M** of the motor shaft **11** in the axial direction. However, there is no particular limitation on the arrangement of the sprocket **19** and the torsion damper **20.** Both of the sprocket **19** and the torsion damper **20** may be arranged on one side in the axial direction relative to the middle position **11M** of the motor shaft **11** in the axial direction. For example, as shown in FIG. **6****,** the sprocket **19** and the torsion damper **20** may be arranged leftward relative to the middle position **11M** of the motor shaft **11** in the axial direction. Note that in the embodiment shown in FIG. **6****,** portions of the power transmission mechanism **15** other than the output shaft **13** are arranged in left-right symmetry with respect to the embodiment shown in FIG. **2****.**

Although not shown in FIG. **1****,** the motorcycle **1** includes a throttle grip **30** (see FIG. **7**). The throttle grip **30** is an example of the throttle operator to be operated by the rider. The output of the motor **12** is adjusted by the rider operating the throttle grip **30.** The control unit **10** is connected to the throttle grip **30** and the motor **12.** The control unit **10** receives signals from the throttle grip **30** and controls the motor **12** based on the amount of operation of the throttle grip **30.** The control unit **10** is capable of various controls. The following is an example of the control.

When starting to drive the motor **12,** the control unit **10** can control the motor **12** so that the motor **12** temporarily generates a torque in the reverse direction and then a torque in the forward direction. For example, when the amount of operation per unit time of the throttle grip **30** becomes equal to or greater than a predetermined threshold value while the motor **12** is not rotating, the control unit **10** first causes the motor **12** to temporarily generate a torque in the reverse direction. This causes elastic deformation of the spring **23** of the torsion damper **20,** thereby storing energy in the torsion damper **20.** Then, the control unit **10** generates a torque in the forward direction on the motor **12.** Thus, the motor **12** starts rotating in the forward direction and the spring **23** restores, thereby releasing the energy stored in the torsion damper **20** (hereinafter referred to as the stored energy). Therefore, the energy of the motor **12** and the stored energy are input to the output shaft **13.** An energy that is greater than the energy output by the motor **12** is temporarily input to the output shaft **13.** The output shaft **13** can instantaneously output a larger energy. Thus, when the rider suddenly opens the throttle grip **30** wide while the motorcycle **1** is standing, it is possible to rapidly start the motorcycle **1.**

When a command to increase the torque of the motor **12** is received while the motor **12** is running, the control unit **10** can control the motor **12** so as to temporarily decrease and then increase the torque of the motor **12.** For example, when the amount of operation per unit time of the throttle grip **30** becomes equal to or greater than a predetermined threshold value while the motor **12** is rotating, the control unit **10** first temporarily decreases the torque of the motor **12.** For example, the torque of motor **12** is decreased from the first torque to the second torque. This causes elastic deformation of the spring **23** of the torsion damper **20,** thereby storing energy in the torsion damper **20.** Then, the control unit **10** increases the torque of the motor **12.** For example, the torque of the motor **12** is increased from the second torque to the third torque that is greater than the first torque. Then, the torque of the motor **12** increases and the spring **23** restores, thereby releasing the energy stored in the torsion damper **20.** The output shaft **13** can instantaneously output a larger energy. Thus, if the rider suddenly opens the throttle grip **30** wide while the motorcycle **1** is running, the motorcycle **1** can accelerate rapidly.

The control unit **10** can control the motor **12** so that the torque of the motor **12** varies periodically. Since the torsion damper **20** includes the spring **23,** the torsion damper **20** has a natural period. If the fluctuation period of the torque of the motor **12** is made to be equal to or closer to the natural period of the torsion damper **20,** it is possible to produce resonance. By using this resonance, it is possible to output a larger energy from the output shaft **13.** For example, when the motorcycle **1** runs at a constant speed, the rider keeps constant the amount of operation of the throttle grip **30.** Then, the control unit **10** receives a steady drive signal from the throttle grip **30.** The control unit **10** controls the motor **12** so that the torque of the motor **12** changes periodically while a steady drive signal is received. For example, the control unit **10** controls the motor **12** so that the fluctuation period of the torque of the motor **12** is a predetermined set period based on the natural period of the torsion damper **20.** Then, it is possible to produce resonance. By using the resonance, it is possible to output a larger driving force from the output shaft **13.** A larger driving force can be output from the output shaft **13** without increasing the torque of the motor **12.**

Some embodiments have been described above, but the aforementioned embodiments are merely illustrative. Various other embodiments are possible.

While the motor shaft **11,** the output shaft **13** and the idle shaft **14** are parallel to each other in the embodiments described above, at least one of them may be nonparallel to at least one other. Where the torsion damper **20** is supported on the motor shaft **11** or the output shaft **13,** the idle shaft **14** may be optional.

A straddled vehicle refers to a vehicle that is straddled by the rider. A straddled vehicle is not limited to an off-road motorcycle. A straddled vehicle is not limited to the motorcycle **1.** A straddled vehicle may be, for example, an auto tricycle, an ATV (All Terrain Vehicle), or a snowmobile.

The terms and expressions used herein are used for explanation purposes and should not be construed as being restrictive. It should be appreciated that the terms and expressions used herein do not eliminate any equivalents of features illustrated and mentioned herein, but include various modifications falling within the claimed scope of the present invention. The present invention may be embodied in many different forms. The present disclosure is to be considered as providing examples of the principles of the invention. These examples are described herein with the understanding that such examples are not intended to limit the present invention to preferred embodiments described herein and/or illustrated herein. Hence, the present invention is not limited to the preferred embodiments described herein. The present invention includes any and all preferred embodiments including equivalent elements, modifications, omissions, combinations, adaptations and/or alterations as would be appreciated by those skilled in the art on the basis of the present disclosure. The limitations in the claims are to be interpreted broadly based on the language included in the claims and not limited to examples described in the present specification or during the prosecution of the application.

### Reference Signs List

1: Motorcycle (straddled vehicle), 5: Electric power unit, 6: Rear wheel (drive wheel), 7: Chain (second power transmission mechanism), 10: Control unit, 11: Motor shaft, 12: Electric motor, 13: Output shaft, 14: Idle shaft, 15: Power transmission mechanism (first power transmission mechanism), 19: Sprocket (connecting portion), 20: Torsion damper (damper), 20B: Torsion damper (the other damper), 21: First rotor, 22: Second rotor, 23: Spring

## Claims

1. An electric power unit **(5),** comprising:
an electric motor **(12)** having a motor shaft **(11);**
an output shaft **(13)** that outputs power;
a first power transmission mechanism **(15)** that is connected to the motor shaft **(11)** and the output shaft **(13)** and transmits power of the motor shaft **(11)** to the output shaft **(13);** and
a damper **(20)** provided in the first power transmission mechanism **(15).**

2. The electric power unit **(5)** according to claim 1, wherein:
the damper is a torsion damper **(20)** including:
a first rotor **(21);**
a second rotor **(22)** arranged coaxial with the first rotor **(21);** and
a spring **(23)** that is interposed between the first rotor **(21)** and the second rotor **(22)** and transmits a torque of the first rotor **(21)** to the second rotor **(22).**

3. The electric power unit **(5)** according to claim 2, comprising:
an idle shaft **(14)** that is parallel to the motor shaft **(11)** and/or the output shaft **(13),**
wherein the first rotor **(21)** and the second rotor **(22)** are supported on the idle shaft **(14).**

4. The electric power unit **(5)** according to claim 2, wherein the first rotor **(21)** and the second rotor **(22)** are supported on the motor shaft **(11).**

5. The electric power unit **(5)** according to claim 2, wherein the first rotor **(21)** and the second rotor **(22)** are supported on the output shaft **(13).**

6. The electric power unit **(5)** according to any one of claims 1 to 5, comprising a control unit **(10)** that controls the electric motor **(12)** so that a torque of the electric motor **(12)** changes periodically while a steady drive signal is received.

7. The electric power unit **(5)** according to claim 6, wherein the control unit **(10)** is configured to control the electric motor **(12)** so that a fluctuation period of the torque of the electric motor **(12)** is a predetermined set period based on a natural period of the damper **(20).**

8. The electric power unit **(5)** according to any one of claims 1 to 5, comprising a control unit **(10)** that, when starting to drive the electric motor **(12),** controls the electric motor **(12)** so as to temporarily generate a torque in a reverse direction and then generate a torque in a forward direction on the electric motor **(12).**

9. The electric power unit **(5)** according to any one of claims 1 to 5, comprising a control unit **(10)** that, when a command to increase a torque of the electric motor **(12)** is received while the electric motor **(12)** is running, controls the electric motor **(12)** so as to temporarily decrease and then increase the torque of the electric motor **(12).**

10. The electric power unit **(5)** according to any one of claims 1 to 9, comprising another damper **(20B)** provided in the first power transmission mechanism **(15).**

11. A straddled vehicle **(1),** comprising:
an electric power unit **(5)** according to any one of claims 1 to 10;
a drive wheel **(6)** that is driven by power of the electric motor **(12);** and
a second power transmission mechanism **(7)** that connects together the output shaft **(13)** and the drive wheel **(6).**

12. The straddled vehicle **(1)** according to claim 11, wherein:
the output shaft **(13)** includes a connecting portion **(19)** connected to the second power transmission mechanism **(7);**
the connecting portion **(19)** is arranged on one side in an axial direction of the motor shaft **(11)** relative to a middle position **(11M)** of the motor shaft **(11)** in the axial direction; and
the damper **(20)** is arranged on the other side in the axial direction relative to the middle position **(11M)** of the motor shaft **(11)** in the axial direction.

13. The straddled vehicle **(1)** according to claim 11, wherein:
the output shaft **(13)** includes a connecting portion **(19)** connected to the second power transmission mechanism **(7);** and
the connecting portion **(19)** and the damper **(20)** are arranged on one side in an axial direction of the motor shaft **(11)** relative to a middle position **(11M)** of the motor shaft **(11)** in the axial direction.

14. The straddled vehicle **(1)** according to any one of claims 11 to 13, wherein the straddled vehicle **(1)** is an off-road motorcycle.
